# EUROPEAN PATENT APPLICATION

(11) **EP 2 357 369 A2**
(43) Date of publication of application: **17.08.2011**
(21) Application number: 11153670.2
(22) Date of filing: 08.02.2011
(51) Int. Cl.: F16B 21/08, B60N 3/02

(54) **Tethered fastener**

(30) Priority: 08.02.2010 GB 1001993
(71) Applicant: Nissan Motor Manufacturing (UK) Ltd., Cranfield Bedfordshire MK43 0DB (GB)
(72) Inventor: Baker, Daniel, Cranfield, Bedfordshire MK43 0DB (GB); Turner, Scott, Cranfield, Bedfordshire MK43 0DB (GB)

(57) **Abstract**

A fastener for securing a member (12) to a body (32), the fastener comprising: an elongate shaft (14) having an insertion end (22) and a support end (14i); a first securing means (20) extending from the insertion end (22); and a second securing means (16) arranged around the shaft (14) adjacent to the support end (14i), wherein the support end (14i) is arranged to secure said member (12) to the shaft (14) and the second securing means (16) is arranged to detachably secure said member (12) to an aperture (7) in a body (32), and the first securing means (20) comprises a barbed portion (20f) arranged to prevent detachment of the fastener from the body (32) but to permit relative movement therebetween. Advantage is retention of the member (12) when a curtain airbag (not shown) is fired, displacing headlining (8) to a displaced position (8d).

## Description

### Field of the invention

The invention is concerned with securing a detachable trim element to a body in such a fashion as to prevent complete separation of said element from said body and particularly, but not exclusively, to the securing of a detachable trim element to a vehicle. Aspects of the invention relate to a securing means, to a trim element, to a method and to a vehicle.

### Background of the invention

Many vehicles such as passenger cars are provided with a grab handle or assist grip mounted to and depending from the interior of a roof. The purpose of this handle is to assist vehicle users to access the vehicle by providing a suitable surface that may be gripped by the user whilst getting into or out of the vehicle. Such handles are typically formed from a moulded plastic material and are secured to a suitably reinforced region of the vehicle roof. The interior of the roof is typically covered with a decorative covering such as a headlining to insulate the interior from exterior noise and heat, and to improve the overall appearance of the interior of the vehicle. In order to secure the grab handle to the vehicle roof, threaded fasteners such as screws or bolts are typically passed through holes in the grab handle and headlining to engage with a correspondingly threaded hole in the roof structure.

In some known vehicles, the vehicle may be provided with roof mounted curtain airbags stowed between the vehicle roof and a headlining. These airbags are concealed from the occupants of the vehicle behind and above the headlining until they are deployed during an event such as a vehicle collision or rollover accident. During such a deployment, the airbag is inflated and displaces a portion of headlining that concealed the airbag from view when it was in its stowed state. The curtain airbag must deploy in a generally downward direction, between the occupants and the side windows and interior surface of the vehicle. To ensure reliable deployment of the curtain airbag, it is common to position any other roof-mounted features such as grab handle assemblies above the stowed position of the curtain airbag.

In some cases, a vehicle manufacturer may produce a vehicle model in a number of different variants, differentiated by variations in interior trim parts or with different levels of equipment, depending on customer choice or market requirement. The differences in vehicle derivatives may dictate different variants of significant vehicle components such as the headlining, adding significantly to cost and to the development time of a vehicle.

One way to counter this is to use simple universal trim elements such as escutcheons. Escutcheons may be used to cover or otherwise conceal specific trim features. Such trim features are intended to cooperate with components that may be omitted depending on the vehicle derivative.

For example, two different derivatives of the same vehicle model may be produced, one built with curtain airbags and with grab handles, the other without either curtain airbags or grab handles. To avoid using a headlining with holes intended for mounting grab handles that are exposed when no grab handles are fitted, two different headlining tools may be required, one to make headlinings with mounting holes for the grab handle assemblies and one without mounting holes. Such tools are expensive; and the use of two different types of headlining adds undesirably to parts complexity. To avoid this situation, a single headlining may be used, provided with grab handle mounting holes, which may be covered or otherwise obscured by escutcheons or other such trim elements when no grab handles are to be fitted. Typically, these escutcheons or trim elements are screwed or clipped through the holes in the headlining and into a trim receiver which may cooperate with either an escutcheon or a grab handle as required. This solution requires little additional assembly time and keeps parts complexity and the resulting costs to a minimum.

Such trim elements may not provide a suitable solution for some vehicle variants; for example, where a vehicle variant has curtain airbags but no grab handles. In this case, the curtain airbag may displace the headlining away from the roof during deployment. Such displacement may be restricted by trim elements that are screwed to the roof. Similarly, with trim elements that are merely held to the roof by clips, the deployment of the curtain airbag may force the trim element away from the headlining during deployment, causing the trim element to become loose within the vehicle, which may be undesirable.

It is an aim of the present invention to address this problem whilst keeping assembly time and parts cost to a minimum.

It is against this background that the present invention has been conceived. It is an aim of the present invention to provide a means for securing a member, such as a trim element to a body and preventing complete detachment, separation or removal therefrom whilst minimising assembly time and parts cost. Aspects and embodiments of the invention may provide a securing means for a fastener for securing a member to a body and to a fastener formed integrally with a trim element. Other embodiments of the invention may provide a vehicle and a method of securing a member to a body. The present invention greatly reduces the assembly time associated with securing a trim element to a body whilst reducing parts complexity, mass and cost.

Other aims and advantages of the invention will become apparent from the following description, claims and drawings.

### Summary of the invention

Aspects of the invention therefore provide an apparatus, a trim element or member, a vehicle and a method as claimed in the appended claims.

According to the invention, there is provided a fastener for securing a member to a body, the fastener having an elongate shaft comprising: an insertion end for insertion into a cooperating aperture in said body; a support end for supporting said member; first securing means disposed at or adjacent the insertion end; and second securing means disposed at or adjacent the support end; wherein the second securing means is arranged to releasably engage with said aperture so as to releasably secure said member thereto; and wherein the first securing means is arranged to hinder or prevent removal or detachment of the fastener following release of the second securing means.

Advantageously, the fastener of the present invention may be installed releasably but not detachably to a body such as a vehicle with a single hand operation without the use of tools. This provides a reliable fastener arranged to permit a pre-determined amount of relative movement between the fastener and the body whilst remaining permanently attached. In this way, the fastener has all of the benefits of minimal assembly time of a clip-in type fastener without the risk of the fastener separating entirely from the vehicle, which may be undesirable.

In an example, the first securing means comprises a resilient hook or barb extending from the shaft.

In an example, the second securing means comprises a friction element for engagement with an aperture in the body.

Advantageously, a resilient hook or barb provides a reliable means for permanently securing the fastener to the body whilst offering the additional benefit of being suitable for a range of sizes and shapes of apertures. Similarly, the use of a friction element provides the fastener with a reliable and easy to use means of releasably securing the fastener to the body. This makes the fastener suitable for adoption on existing vehicle designs without the need for a complicated re-design of the vehicle or a plurality of fastener tools.

In an example, the shaft further comprises a resilient intermediate portion between the insertion end and the second securing means, wherein the intermediate portion is arranged to provide the detachable member with a flexible tether to the body permitting relative movement therebetween.

Advantageously, the flexibility of the resilient intermediate portion allows the first securing means and the insertion end to conform to the available space provided in the body. In this way, the same fastener may be used for a variety of different holes in a body such as a vehicle and for a number of different vehicle variants, without placing unnecessary restrictions on the design of the part of the vehicle into which the fastener is to be inserted.

In an example, the support end of the shaft comprises a flexible joint arranged to permit relative movement between the support end and the second securing means.

Advantageously, the flexible joint absorbs tolerances between the body and the support end, which may not always be perpendicular to one another.

In another aspect of the present invention for which protection is sought, there is provided a trim element comprising at least one fastener according to any preceding paragraph.

In an example, the fastener is formed integrally with the trim element.

Advantageously, this minimises tooling complexity and associated cost. Additionally, integrating the fastener with the trim element negates the need for any sub-assembly of the two parts.

In an example, the trim element further comprises at least one feature extending from a surface of the trim element adjacent to the second securing means, wherein the feature is arranged to limit relative movement between the trim element and the second securing means.

Advantageously, such features prevent excessive movement of the trim element relative to the shaft, minimising stress and improving reliability in use, especially at the extremes of articulation.

In a further aspect of the present invention for which protection is sought, there is provided a vehicle comprising a fastener or trim element according to any preceding paragraph.

In a still further aspect of the present invention for which protection is sought, there is provided a method of securing a fastener to a body, the method comprising: inserting an insertion end of a shaft of a fastener into an aperture provided in the body; pushing the shaft of the fastener into the aperture until a first securing means extending from the shaft passes into the aperture; and ceasing pushing the shaft into the aperture once a second securing means arranged around the shaft distal from the insertion end has passed into and cooperates with the aperture, wherein upon applying a force to the fastener to pull it away from the aperture, the engagement between the second securing means and the aperture resists the displacement of the fastener relative to the aperture until the first securing means engages with a part of the perimeter of the aperture, and the engagement of the first securing means with said aperture deploys the first securing means so as to prevent removal of the fastener from the body.

Within the scope of this application it is envisaged that the various aspects, embodiments, examples, features and alternatives set out in the preceding paragraphs, in the claims and/or in the following description and drawings may be taken independently or in any combination thereof. In particular, features described in connection with one embodiment are applicable to the other embodiment, except where there is an incompatibility of features.

### Brief Description of the Drawings

The present invention will now be described, by way of example only, with reference to the accompanying drawings in which:
Figure 1 shows a below perspective view of a known grab handle assembly and headlining for a vehicle roof;
Figure 2 shows an above perspective view in isolation of a trim element according to an aspect of the present invention;
Figure 3 shows a detailed section view through a vehicle roof and headlining assembly comprising a trim element of Figure 2; and
Figure 4 shows a representation of the roof and headlining assembly of Figure 3 after a roof mounted curtain airbag has deployed, displacing the headlining and trim element.

While the examples given for suitable applications for the present invention relate to a fastening means for vehicle trim elements, it will be appreciated by one skilled in the art that there are potentially other uses for the present invention including uses not related to vehicles.

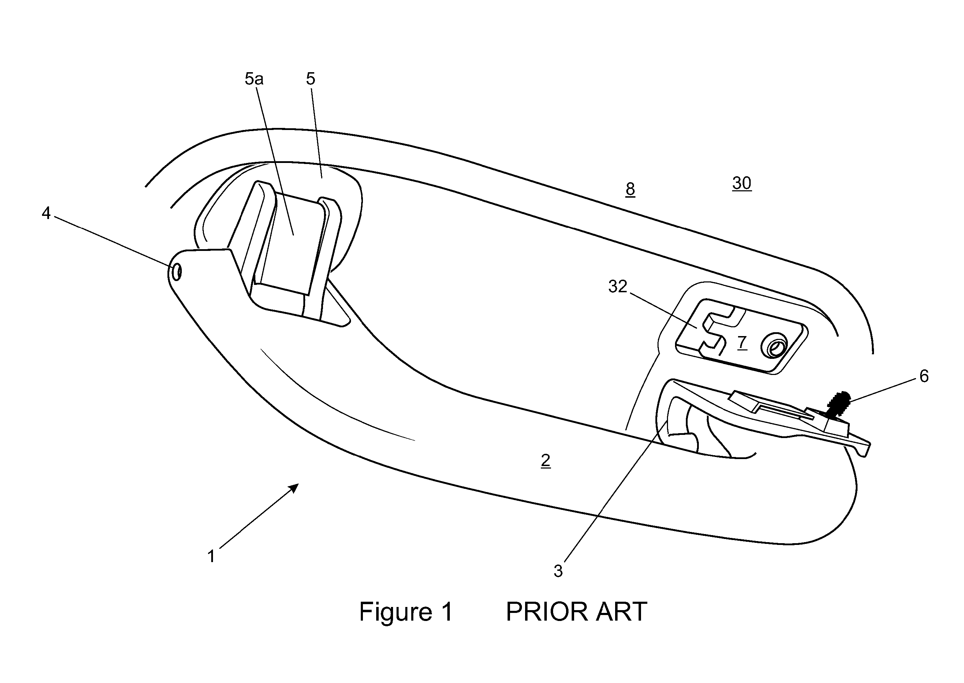

Figure 1 shows a below perspective view of a known grab handle assembly 1 partly assembled to a headlining 8 and a vehicle roof 30. The assembly comprises a handle portion 2 pivotably mounted via a pair of handle pivots 4 and mounting bases 5 to a roof reinforcement member 32 forming part of the structure of the vehicle roof 30. By pivotably mounting the handle portion 2 to the roof 30 in this way, the handle may be folded against the headlining 8 when not in use, minimising the intrusion into the occupant compartment of the vehicle (not shown).

In the example shown, a coat hook 3 is formed integrally in one of the mounting bases 5 for the convenience of the user. Each mounting base 5 is provided with a through-hole (not shown) for securing the handle assembly 1 to the roof 30 by means of a threaded fastener 6. During the assembly of the grab handle to the vehicle roof 30, an assembly operator inserts the threaded fastener 6 into the through-hole in the mounting base 5 and into a cooperating trim receiver 7. The cooperation between the threaded fastener 6 and the trim receiver 7 secures the handle assembly 1 to the reinforcement member 32 in the roof 30. The assembly operator then tightens the threaded fasteners 6 to secure the handle assembly 1 to the vehicle roof. In the example shown in Figure 1, the heads of the fasteners are covered using escutcheons 5a. These escutcheons may be discrete parts, separate from the mounting bases 5 or, as in the case of the example shown in the Figure, may be integrally formed into the mounting bases 5 and secured by an integrally moulded live hinge arrangement.

It is known for some vehicles to be provided with roof mounted curtain airbags (not shown), stowed between the vehicle roof 30 and the headlining 8. These airbags are located behind and above the headlining 8 so as to conceal them from the vehicle occupants. These curtain airbags will remain concealed in this way until they are deployed during an event such as a vehicle collision or rollover accident. During deployment, the curtain airbags inflate, and displace a portion of headlining 8 that had concealed the airbags from view when they were in their stowed condition. Typically, the curtain airbag deploys in a generally downward direction, between the occupants and the side windows and/or side walls of the vehicle interior. To ensure reliable deployment of the curtain airbag, it is common to position any other roof-mounted feature such as the grab handle assembly 1 above the stowed position of the curtain airbag and away from the deployment path of the airbag.

In some cases, one vehicle model may be produced in different trim grades or variants, with different levels of equipment, depending on customer choice or market requirement. The differences in vehicle derivatives may require differences in vehicle components such as the headlining 8, adding significant cost to the development of a vehicle. This may be countered by using simple universal trim elements such as escutcheons. Escutcheons may be used to cover or otherwise conceal specific trim features and are particularly useful to cover specific trim features rendered redundant by the trim grade or variant. In such cases, the trim features may be intended to cooperate with components that are only used for a given vehicle or trim variant.

For example, one vehicle model may be built in two different trim grades, one built with curtain airbags and grab handles 1, and the other without curtain airbags or grab handles 1. To avoid the requirement for two different headlining parts, one headlining 8 with mounting holes for the grab handle assemblies 1 and one headlining 8 without, escutcheons may be used to cover the holes that would otherwise be visible in the variant without grab handles 1. Typically, these escutcheons or trim elements are screwed or clipped through the holes in the headlining 8 and into the trim receiver 7 provided in the roof 30. This solution requires little additional assembly time and keeps parts complexity and the resulting costs to a minimum.

Such trim elements or escutcheons may not provide a suitable solution for some vehicle variants, for example, where a vehicle variant has curtain airbags but no grab handles 1. In this case, the curtain airbag may displace the headlining 8 away from the roof 30 during deployment. Use of trim elements that are screwed to the roof will limit or even prevent displacement of the headlining 8 from the roof during deployment of the airbag. In addition, such trim elements require additional fasteners and the use of tools and associated time to install them. Similarly, with trim elements that are merely held to the roof by clips, the deployment of the curtain airbag may force the trim element away from the headlining during deployment, causing the trim element to become loose within the vehicle, which may be undesirable.

It is an aim of the present invention to address this problem whilst keeping assembly time and parts cost to a minimum.

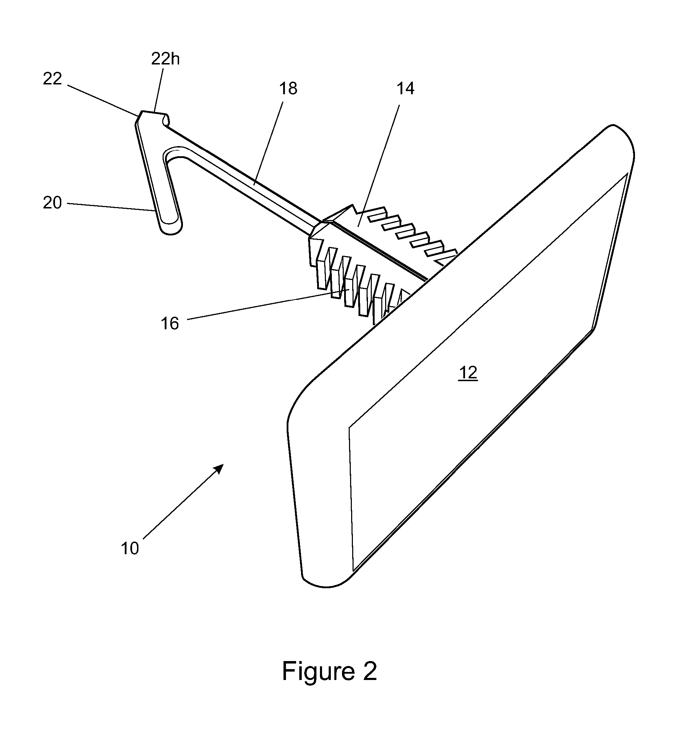

Figure 2 shows a perspective view of a trim element 10 in isolation, according to an aspect of the present invention. The trim element 10 comprises a decorative cover or plug 12 from which extends an integrally formed securing post or shaft 14. The shaft 14 is provided with a support end for supporting the plug 12 - in the illustrated embodiment the support end is attached to or formed integrally with the plug 12 - and an insertion end 22, arranged for insertion into an aperture in a body such as a vehicle (not shown) in order to secure the trim element 10 to said body.

The insertion end 22 comprises a resilient hook-like feature or barb 20 depending from the shaft 14 via a flexible elongate portion or barb support 18. In the example shown in the figures, the insertion end 22 further comprises a heel portion 22h extending from the insertion end 22 away from the barb 20. The function of the heel portion 22h will be described later.

In this example, the barb 20 is arranged to secure the plug 12 to a body such as a vehicle roof (not shown) by engagement with a corresponding aperture in the body. Once fitted to the aperture in the body, the barb 20 is arranged to prevent detachment of the trim element 10 from the vehicle, but to still permit relative movement therebetween. The heel portion 22h extends from the insertion end 22 behind the barb 20 and is arranged to engage with the perimeter of the aperture to ensure that the barb 20 holds the shaft 14 of the trim element 10 to the body and not be released therefrom.

The trim element 10 in the example shown may be formed from a plastic material by means of injection moulding; although it is envisioned that the element may be formed from an assembly of parts. Alternatively, it is envisioned that the trim element 10 of the present invention may be formed from a suitable metal such as spring steel.

In the example shown in Figure 2, the shaft 14 of the trim element 10 comprises a first securing means, in the form of the hook or barb 20 extending from the insertion end 22, and a second securing means in the form of a fir tree fastener or fixing 16, arranged around the shaft 14. The first securing means and the second securing means are spaced apart by the barb support 18. The fir tree fixing 16 is arranged to detachably secure the trim element 10 to the body and to locate the plug 12 relative to the aperture in the body by means of a friction fit with the corresponding aperture in the body.

The trim element 10 presents several advantages over a simple clip-in or screw-in type escutcheon. One advantage is that, unlike the known screw-in type escutcheon, there is no need for additional fasteners to secure the trim element 10 to the vehicle roof, minimising cost and weight and reducing assembly time. Another advantage is that, unlike the clip-in type escutcheon, this trim element 10 may be displaced away from the roof during curtain airbag deployment but remain attached to the roof, preventing the trim element becoming loose within the vehicle.

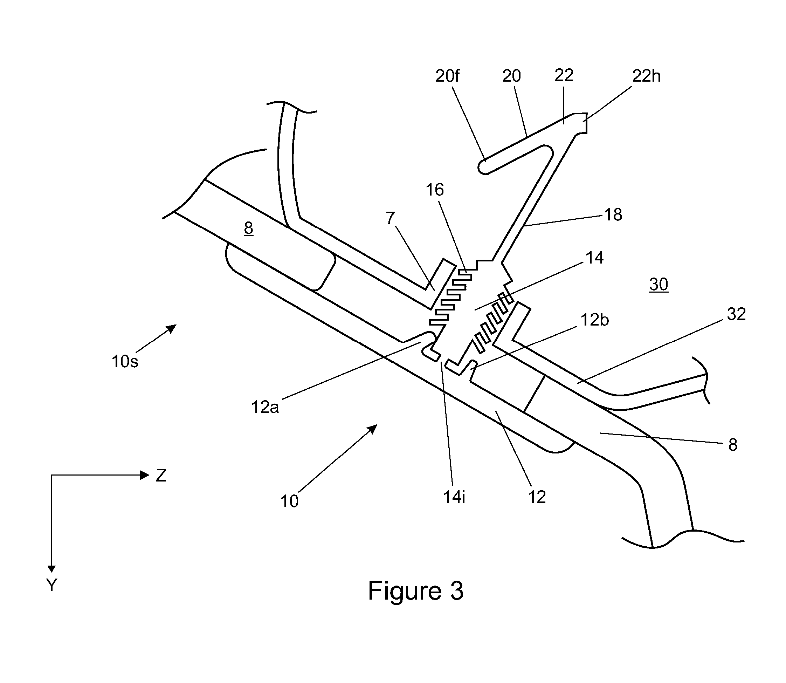

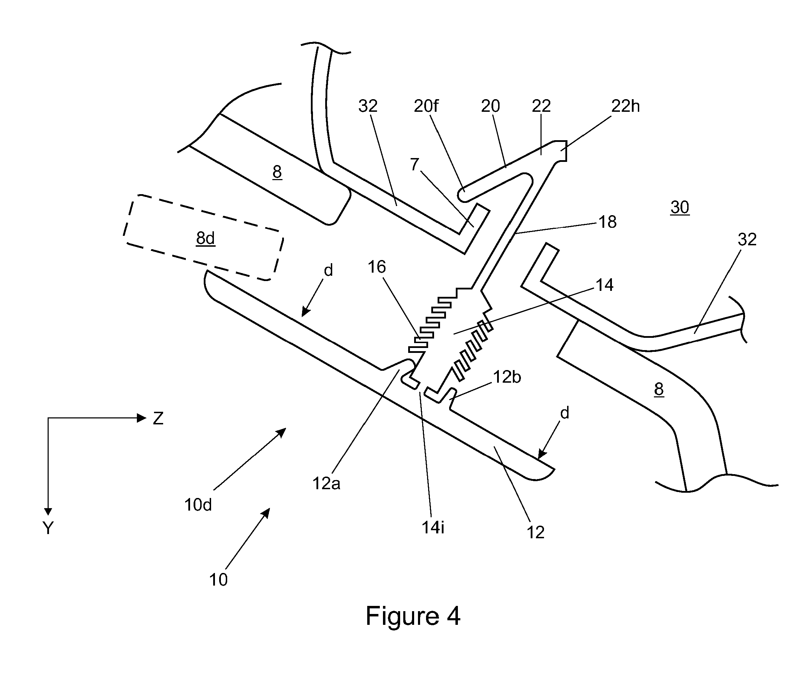

Figure 3 and Figure 4 show a section through the trim element 10 of Figure 2 insitu, assembled to a vehicle headlining 8. Figure 3 shows the trim element 10 in a stowed condition 10s, where the plug 12 abuts the headlining 8. Figure 4 shows the trim element 10 in a deployed condition 10d where it and the headlining 8 have been displaced by a deployed curtain airbag (not shown). For clarity, an arrow Z indicates the orientation of the vertical axis of the vehicle with the arrow pointing upwards. A second arrow Y indicates the orientation of the horizontal axis, with the arrow pointing laterally towards the longitudinal centreline of the vehicle.

Figure 3 shows a section view through the trim element 10 and vehicle roof assembly shown generally at 30. The roof assembly 30 comprises a reinforcer panel 32 arranged to locally reinforce a portion of the vehicle roof 30 and support a trim receiver 7. The trim receiver 7 may be formed integrally with the reinforcer panel 32 in the form of a thread-form fastener or aperture. The reinforcer panel 32 is typically formed from a metallic sheet stamped or otherwise formed into the desired shape. Alternatively, the trim receiver 7 may be an additional part such as a weld nut or other threaded insert.

For vehicles fitted with a roof-mounted grab handle (not shown) the trim receiver 7 is arranged to cooperate with a fixing bolt or screw for securing the grab handle to the vehicle roof 30, as described in Figure 1. However, in the example shown in Figures 3 and 4, the grab handle has been omitted from the vehicle and the associated hole in the headlining 8 is covered or plugged using the trim element 10.

The trim element 10 is assembled into a vehicle by inserting the insertion end 22 into the corresponding hole in the headlining 8 and into the trim receiver 7 in the vehicle roof 30. The resilient hook or barb 20 extends at an angle to the shaft 14 to an extent where the distance between an open or free end 20f of the barb 20 and the shaft 14 is greater than the diameter of the aperture provided in the trim receiver 7. The resilience of the hook or barb 20 allows the free end 20f to be deflected towards the shaft 14 during insertion into the trim receiver 7. The barb 20 and barb support 18 are inserted beyond the trim receiver 7 and into a void formed between the reinforcer panel 32 and the roof 30. The barb 20 is initially compressed back against the shaft 14 or barb support 18 as the barb 20 is inserted into the hole. Once it has been pushed through the headlining sufficiently to clear the trim receiver 7, the barb 20 resiliently returns to its original shape. The fir-tree fixing 16 is arranged to extend sufficiently along the shaft 14 so that it can penetrate the headlining 8 and extend into and/or engage with the trim receiver 32. During insertion into the trim receiver 7 in the roof 30, the flexibility of the barb support 18 allows the barb 20 and the insertion end 22 to conform to the available space provided by the enclosed volume between the roof 30 and the reinforcer 32. In this way, the same trim element 10 may be used for a variety of different holes in a vehicle and for a number of different vehicle variants without placing unnecessary restrictions on the design of the part of the vehicle into which the trim element is to be inserted.

The barb support 18 is formed from a flexible and/or resilient material such as a plastic or rubber-like material, arranged to ensure that the barb 20 returns substantially to its original size and shape once it has been inserted beyond the trim receiver 7. The recovery of the barb 20 substantially to its original size and shape hinders or prevents the removal of the trim element 10 from the roof 30 after assembly.

The surface of the fir-tree fixing is arranged to engage with the interior surface of the trim receiver 32 and by means of friction or by raised deformable formations, to grip the trim receiver 32 sufficiently to hold the trim element 10 in place. It will be appreciated that the type of fixing used to secure the trim element 10 to the trim receiver 32 need not be limited to a fir-tree fixing 16, but could be a friction element or expanding fastener.

During assembly of the vehicle, the assembly operator simply locates the insertion end 22 into the hole in the headlining 8 to be covered and pushes against the plug 12 by hand until the plug 12 abuts the surface of the headlining 8.

Once installed, the trim element 10 effectively traps a portion of the headlining 8 between the plug 12 and the roof 30. The trim element 10, with the integrated fastening means provided by the barb 20 and fir tree fastener 16, may thus be installed into a body such as a vehicle, with one hand and with a single operation, without necessitating the use of tools.

Figure 4 shows the trim element 10 in a deployed condition 10d where it and the headlining 8 have been displaced by a deployed curtain airbag (not shown). The position of the displaced headlining is represented by a portion of the deployed headlining 8d shown in phantom. The trim element 10 is displaced by the deploying airbag (not shown), releasing the fir-tree fixing 16 from the trim receiver 7. As the curtain airbag continues to deploy, the trim element 10 is displaced further away from the roof 30 in the direction of the arrows d, until the barb 20 engages with the back of the trim receiver 7. As the barb 20 impinges against the trim receiver 7 the barb support 18 flexes and moves towards the side of the trim receiver 7 opposite the barb 20. This deflection of the barb support 18 continues until the heel portion 22h engages with the trim receiver 7. Once the barb 20 and the heel portion 22h have both engaged the trim receiver 7, the trim element 10 is flexibly tethered to the reinforcer 32 of the roof 30 by the barb support 18. It will be appreciated that the function of the heel portion 22h could be achieved by other means, such as a second barb or the like.

To allow some flexibility between plug 12 and shaft 14, the connection between the shaft and the plug is provided with a waisted portion 14i formed in the support end of the shaft 14. This waisted portion 14i absorbs tolerances between the headlining and the trim receiver, which may not always be perpendicular to one another. In this way, the plug 12 may sit flush against the headlining 8 even if there is some variation between the relative positions of the hole in the headlining 8 and the trim receiver 7.

To prevent excessive movement of the plug 12 relative to the shaft 14, the surface of the plug 12 adjacent to the shaft 14 is provided with surface features arranged to abut the shaft 14 and provide support to the waisted portion 14i at the extremes of articulation. These surface features, or shaft supports 12a, 12b may take the form of a series of raised posts or may take the form of a raised ring formed concentrically around the shaft 14. The shaft supports 12a, 12b serve to position the plug 12 a pre-determined distance from the trim receiver 7 by abutting the trim receiver 7 when the plug 12 abuts the headlining. In an example (not shown), the shaft supports 12a, 12b and the trim receiver 7 are provided with corresponding features to form a snap-fit connection between the trim element 10 and the trim receiver 7. The purpose of this snap-fit is primarily to provide the assembly operator with an audible indication when the trim element 10 is fully inserted and thus correctly positioned relative to the headlining 8 and roof assembly 30.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. A fastener for securing a member (12) to a body (32), the fastener having an elongate shaft (14) comprising:
an insertion end (22) for insertion into a cooperating aperture (7) in said body (32);
a support end (14i) for supporting said member (12);
first securing means (20) disposed at or adjacent the insertion end (22); and
second securing means (16) disposed at or adjacent the support end (14i);
wherein the second securing means (16) is arranged to releasably engage with said aperture (7) so as to releasably secure said member (12) thereto; and
wherein the first securing means (20) is arranged to hinder or prevent removal or detachment of the fastener following release of the second securing means (16).

2. A fastener as claimed in claim 1, wherein the first securing means (20) is arranged to permit relative movement between the fastener and the body (32) following release of the second securing means (16).

3. A fastener as claimed in claim 1 or claim 2, wherein the first securing means (20) comprises means (18) arranged to facilitate insertion of the fastener into the aperture (7) in the body (32) but to hinder or prevent withdrawal of the fastener therefrom.

4. A fastener as claimed in any preceding claim, wherein the first securing means (20) comprises at least one flexible and/or resilient hook or barb (20f) extending from the shaft (14).

5. A fastener as claimed in any preceding claim, wherein the second securing means (16) comprises a friction element for engagement with an aperture (7) in the body (32).

6. A fastener as claimed in any preceding claim, wherein the shaft (14) comprises a flexible and/or resilient intermediate portion (18) between the insertion end (22) and the second securing means (16) arranged to flexibly tether the member (12) to the body (32) following release of the second securing means (16) and permitting relative movement therebetween.

7. A fastener as claimed in any preceding claim, wherein the support end (14i) of the shaft (14) comprises a flexible and/or resilient joint arranged to permit relative movement between the support end (14i) and the second securing means (16).

8. A fastener as claimed in any preceding claim, wherein the member (12) is connected to or integrally formed with the support end (14i) of the shaft (14).

9. A fastener as claimed in claim 8, wherein the member (12) comprises an escutcheon, a cover or a trim element for a vehicle.

10. A trim element (10) for a vehicle comprising at least one fastener as claimed in any preceding claim.

11. A trim element (10) as claimed in claim 10, wherein the fastener is formed integrally with the trim element.

12. A trim element (10) as claimed in claim 10 or claim 11, comprising means (12a, 12b) for limiting relative movement between the trim element (10) and the second securing means (16).

13. A trim element (10) as claimed in claim 12, wherein said means comprises at least one feature (12a, 12b) extending from a surface of the trim element (10) adjacent to the second securing means (16) and arranged to prevent excessive relative movement between the trim element (10) and the second securing means (16) by abutting a portion of the shaft (14).

14. A vehicle comprising a fastener or trim element (10) as claimed in any preceding claim.

15. A method of securing a trim element (10) of a vehicle to a vehicle body (32), the method comprising:
inserting a fastener for supporting the trim element (10) into an aperture (7) provided in the body (32);
releasably engaging the fastener in the aperture (7); and
on deployment of an airbag or the like in the vehicle close to or adjacent the trim element (10), permitting the fastener to release from the aperture (7) but hindering or preventing the fastener from detaching from the body (32).
